# EUROPEAN PATENT APPLICATION

(11) **EP 4 574 597 A1**
(43) Date of publication of application: **25.06.2025**
(21) Application number: 24215651.1
(22) Date of filing: 27.11.2024
(51) Int. Cl.: B60T 17/08, F16D 66/00, G01D 5/14

(54) **SPRING BRAKE ACTUATORS AND APPARATUSES THEREOF**

(30) Priority: 30.11.2023 US 202363604614 P; 26.11.2024 US 202418960936
(71) Applicant: TSE Brakes, Inc., Cullman, AL 35055 (US)
(72) Inventor: Drake, Will Brandon, 35058 Cullman, AL (US)
(74) Representative: Håmsø Patentbyrå AS

(57) **Abstract**

A spring brake actuator for braking a wheel of a vehicle includes a housing defining a chamber, a push rod extending from the chamber such that pneumatic activation of the spring brake actuator causes the push rod to further extend out of the chamber to thereby activate braking of the wheel of the vehicle and such that pneumatic deactivation of the spring brake actuator causes the push rod to retract back into the chamber to thereby deactivate braking of the wheel of the vehicle, and a sensor assembly located in the chamber such that the housing limits movement of the sensor assembly in the chamber.

## Description

### CROSS-REFERENCE TO RELATED APPLICATION

The present disclosure is based on and claims priority to U.S. Provisional Patent Application No. 63/604,614 filed November 30, 2023 and U.S. Utility Patent Application No. 18/960,936 filed November 26, 2024.

### FIELD

The present disclosure relates to vehicle braking systems, including, but not limited to, pneumatically-operated spring brake actuators having a push rod that engages a wheel brake.

### BACKGROUND

Reference is made to the following U.S. Patents and U.S. Patent Application Publication for useful background information.

U.S. Patent No. 10,913,439 discloses example conventional spring-brake actuators. The spring-brake actuator has a push rod assembly with a base located in a service brake chamber and a push rod extending from a service brake chamber. Pneumatic activation of the spring-brake actuator causes the push rod to further extend out of the service brake chamber to thereby engage a wheel brake with a wheel of the vehicle. Pneumatic deactivation of the spring-brake actuator causes the push rod to retract back into the service brake chamber to thereby disengage the wheel brake from the wheel of the vehicle.

U.S. Patent No. 11,130,482 discloses a brake chamber having a chamber housing having an end, a push rod configured for reciprocal movement in the chamber housing in a first direction and a second direction over a stroke distance, a return spring disposed in the chamber housing configured to urge the push rod in the second direction and a sensor assembly having a sensor and a magnet movable relative to the sensor with movement of the push rod. The sensor is configured to detect a magnetic field strength of the magnet and output sensor data representative of the detected magnetic field strength. The sensor assembly is configured to determine a position of the push rod based on the sensor data over the entire stroke distance

U.S. Patent No. 11,639,166 discloses a spring brake actuator for applying a brake of a vehicle having a housing containing a diaphragm that separates the housing into first and second chambers. A clutch actuator device is for selectively compressing a compression spring such that the spring brake actuator is operable in a plurality of states including a parking state, driving state, and a braking state.

U.S. Patent No. 10,913,439 discloses a spring brake actuator. The spring brake actuator has a push rod assembly with a base located in a service brake chamber and a push rod extending from a service brake chamber. Pneumatic activation of the spring brake actuator causes the push rod to further extend out of the service brake chamber to thereby engage a wheel brake with a wheel of the vehicle. Pneumatic deactivation of the spring brake actuator causes the push rod to retract back into the service brake chamber to thereby disengage the wheel brake from the wheel of the vehicle

U.S. Patent Application Publication No. 2023/0382363 discloses a system for monitoring stroke of a spring brake actuator of a vehicle that includes a spring brake actuator having a push rod, wherein pneumatic activation of the spring brake actuator causes the push rod to further extend out of the spring brake actuator to thereby activate braking of the vehicle, and wherein pneumatic deactivation of the spring brake actuator causes the push rod to retract back into the spring brake actuator to thereby deactivate braking of the vehicle. A first magnet and a second magnet are coupled to the push rod, and the second magnet is spaced apart from the first magnet. A sensor is configured to sense a magnetic field created by the first magnet and the second magnet, and a controller is configured to determine stroke of the push rod based on the magnetic field.

### SUMMARY

This Summary is provided to introduce a selection of concepts that are further described below in the Detailed Description. This Summary is not intended to identify key or essential features of the claimed subject matter, nor is it intended to be used as an aid in limiting the scope of the claimed subject matter.

In certain examples, a spring brake actuator for braking a wheel of a vehicle includes a housing defining a chamber, a push rod extending from the chamber such that pneumatic activation of the spring brake actuator causes the push rod to further extend out of the chamber to thereby activate braking of the wheel of the vehicle and such that pneumatic deactivation of the spring brake actuator causes the push rod to retract back into the chamber to thereby deactivate braking of the wheel of the vehicle, and a sensor assembly located in the chamber such that the housing limits movement of the sensor assembly in the chamber.

In certain examples, a spring brake actuator for braking a wheel of a vehicle includes a housing defining a chamber and including an end wall and a stiffening element, the stiffening element coupled to the end wall and extending into the chamber, a push rod extending from the chamber through the end wall such that pneumatic activation of the spring brake actuator causes the push rod to further extend out of the chamber to thereby activate braking of the wheel of the vehicle and such that pneumatic deactivation of the spring brake actuator causes the push rod to retract back into the chamber to thereby deactivate braking of the wheel of the vehicle, and a sensor assembly located in the chamber and including a leg that engages the stiffening element thereby limiting movement of the sensor assembly.

Various other features, objects, and advantages will be made apparent from the following description taken together with the drawings.

### BRIEF DESCRIPTION OF THE DRAWINGS

The present disclosure is described with reference to the following Figures. The same numbers are used throughout the Figures to reference like features and like components.
Fig. 1 is a cross-sectional view of an example spring brake actuator according to the present disclosure in a driving state.
Fig. 2 is a cross-sectional view of the spring brake actuator of Fig. 1 in a braking state.
Figs. 3-4 are perspective views of an example sensor assembly according to the present disclosure.
Fig. 5 is a cross-sectional view of the sensor assembly along line 5-5 on Fig. 3.
Fig. 6 is a perspective view of the sensor assembly of Fig. 3 coupled to an example spring brake actuator, which is partially depicted.
Fig. 7 is a cross-sectional view of the sensor assembly and spring brake actuator depicted in Fig. 6.
Fig. 8 is a top-down end view of the sensor assembly of Fig. 3 coupled to an example spring brake actuator.
Fig. 9 depicts the sensor assembly of Fig. 8 in different positions (denoted as "A", "B", "C", and "D") relative to the spring brake actuator.

### DETAILED DESCRIPTION

Heavy trucks, trailers, and other commercial vehicles typically use brake systems including pneumatically-operated spring brake actuators which provide the braking forces necessary to stop the vehicle. Such a system typically includes a brake pedal positioned on the floor of the driver's cab or compartment of the vehicle which, upon activation, causes pressurized air from an air reservoir to enter an air chamber of the spring brake actuator. The spring brake actuator features a push rod which is caused to extend out of the air chamber to activate a wheel brake having brake shoes with a brake lining material that is pressed against a brake drum at the vehicle wheel-end. The wheel brake often includes a slack adjustor which turns a cam roller via a camshaft to force the brake shoes to engage the brake drum to stop the vehicle. Releasing the pressurized air from the air chamber allows a spring within the air chamber to retract the push rod back to its original position. See above-referenced U.S. Patent No. 10,913,439 for an example conventional spring brake actuator.

The present inventor has observed that the output force generated by a conventional spring brake actuator, such as the conventional spring brake actuator disclosed in U.S. Patent No. 10,913,439, can be non-linear throughout the range of motion and decreases near the full-stroke limit. Federal regulations define the maximum stroke that can be used during vehicle operations as a subset of the full range of stroke as manufactured. If brake actuator push rod movement exceeds the specified limit during inspection, the brakes are considered to be out of adjustment.

In certain examples, automatic slack adjusters have been required for new trucks and tractors since 1994 and for new trailers since 1995; however, brake adjustment violations continue to rank among the top five vehicle out-of-service violations in the United States. In addition to on-going mitigation efforts, improved means of detection are viewed as an important component in addressing this wide-spread safety concern.

Some conventional stroke monitoring systems, such as the conventional systems disclosed in above-referenced U.S. Patent No. 11,130,482, utilize a single magnet and/or one or more sensors to determine brake stroke at fixed, predetermined positions-one of these positions frequently being the "out of adjustment" or "overstroke" position. Other conventional systems, such as the conventional systems disclosed in above-referenced U.S. Patent App. Pub. No. 2023/0382363, utilize more than one magnet and one or more sensors to determine brake stroke.

Through research and experimentation, the present inventor endeavored to develop sensor assemblies positioned in the spring brake actuator that house and protect one or more sensing components (e.g., sensors, electrical components, magnets) from debris, moisture, and/or damage. The sensor assemblies of the present disclosure also advantageously prevent excessive rotation thereof due to the design of the sensor assembly, which is described in greater detail therein below.

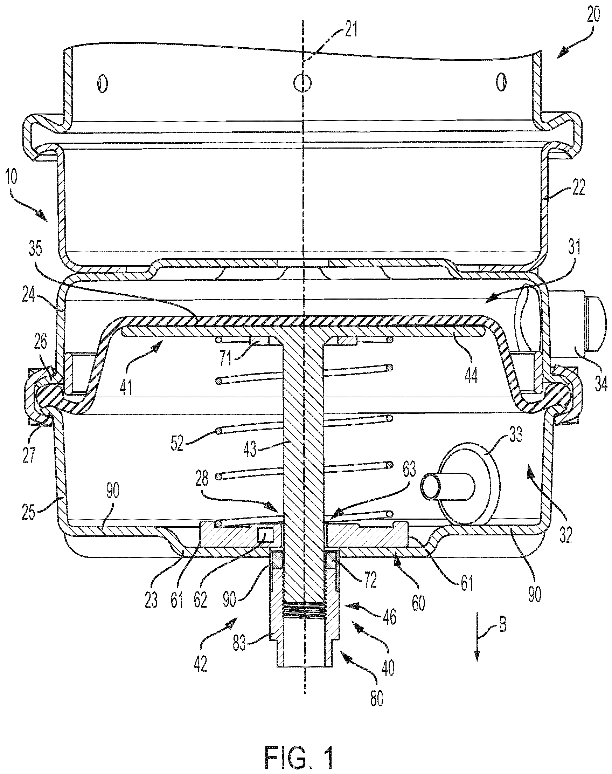

Fig. 1 depicts an example system 10 according to the present disclosure. The system 10 includes a spring brake actuator 20 for applying a wheel brake of a vehicle. The spring brake actuator 20 extends along a brake axis 21 and has an axially elongated housing 22. The housing 22 includes opposing cup-shaped end housing portions, namely a first housing portion 24 and a second housing portion 25. The first and second housing portions 24, 25 have perimeter flanges 26, 27 respectively, that engage each other in a sealing relationship. The housing 22 defines a first chamber 31 and a second chamber 32. The first chamber 31 is separated from the second chamber 32 by a flexible diaphragm 35. The perimeter of the diaphragm 35 is held and compressed by the perimeter flanges 26, 27. A port 34 formed through the first housing portion 24 is configured to admit and release compressed air to and from the first chamber 31. The pressurized air can be provided by a conventional source of pressurized air located on the vehicle. A port 33 formed through the second housing portion 25 is configured to admit and release air to and from the second chamber 32.

A push rod 40 has a first end portion 41 abutting the diaphragm 35 and an opposite, second end portion 42 extending out of second chamber 32. The second end portion 42 is pivotably coupled to a lever arm of a conventional slack adjuster or cam roller (not shown). The slack adjuster and/or cam roller is configured to translate the reciprocal movement of the push rod 40 to a wheel brake for the vehicle. The push rod 40 has a rod 43 located in the second chamber 32 and extending through a hole in an end wall 23 of the second housing portion 25. The push rod 40 also includes an end flange 44 that abuts the diaphragm 35 such that as the diaphragm 35 flexes back and forth in the housing 22, the rod 43 reciprocates out of and back into the second chamber 32.

A return spring 52 is located in the second chamber 32 and is compressed between the end wall 23 of the second housing portion 25 and the end flange 44 to thereby bias the rod 43 into the second chamber 32 and oppose movement of the rod 43 out of the second chamber 32.

The spring brake actuator 20 includes a first magnet 71 directly or indirectly coupled to the end flange 44 of the push rod 40. The first magnet 71 faces an example sensor assembly 60 (other similar example sensor assemblies 60 are described further herein) and moves with the end flange 44 as the rod 43 reciprocates into and out of the second chamber 32, as noted above. In one example, the first magnet 71 is embedded in the end flange 44. In another example, the first magnet 71 is disposed on an upper or lower surface of the end flange 44. The second magnet 72 is coupled to a rod end 46 of the rod 43, and the push rod 43 slidably extends through a hole 63 defined by the sensor assembly 60.

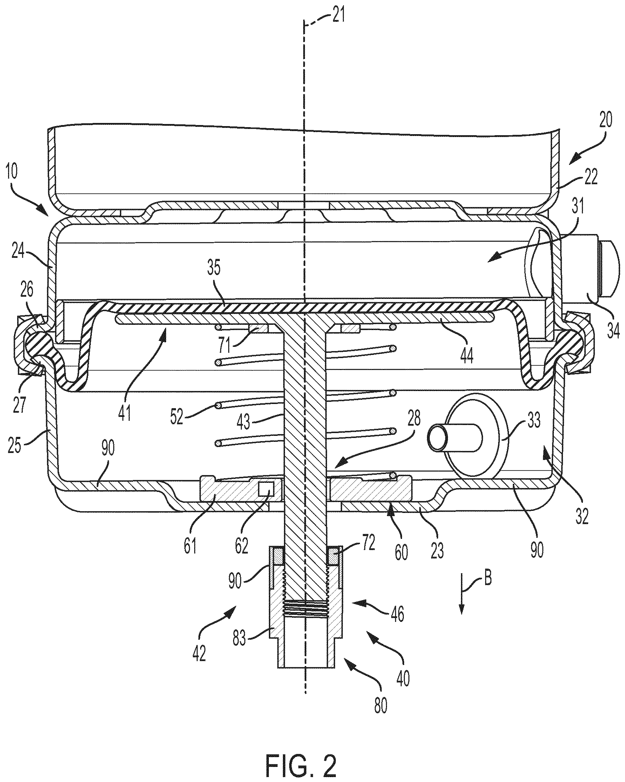

The spring brake actuator 20 moves into several different braking states as the operator depresses a brake pedal (not depicted) to thereby apply the wheel brake to slow or stop the vehicle. Fig. 1 depicts the spring brake actuator 20 in a driving state in which the spring brake actuator 20 does not apply braking forces to the wheels. When depressing the brake pedal, pressurized air is provided via the port 34 to the first chamber 31 such that the air pressure in the first chamber 31 moves the diaphragm 35 in a direction (arrow B) against the bias of the return spring 52. As such, the rod 43 moves (see arrow B) out of the second chamber 32 such that the distance between the rod end 46 and the housing 22 increases thereby causing the wheel brakes to be applied (see Fig. 2). In certain examples, pneumatic activation of the spring brake actuator 20 causes the push rod 40 to further extend out of the second chamber 32 to thereby activate braking of the wheel of the vehicle and pneumatic deactivation of the spring brake actuator 20 causes the push rod 40 to retract back into the second chamber 32 to thereby deactivate braking of the wheel of the vehicle.

The sensor assembly 60 is in the second chamber 32, and in certain examples, the sensor assembly 60 is coupled to the end wall 23 of the second chamber 32. The sensor assembly 60 includes one or more sensing components, such as sensors, magnets, printed circuit boards, electrical components, and/or the like. The sensor assembly 60 is for sensing various forces, movements, environmental influences, and/or the like that are related to, generated by, and/or acting on components of the spring brake assembly 20 (which can be referred to herein as `spring brake actuator components'; e.g., push rod, magnet, housing, diaphragm, etc.). For example, the sensor assembly 60 can be for sensing the presence of one or more spring brake actuator component(s) (e.g., piston rod, magnet), characteristics of the spring brake actuator component(s) (e.g., magnetic field strength), movement of the spring brake actuator component(s), distance of the spring brake actuator component(s) relative to other spring brake actuator component(s), vibration forces acting on or are generated by the spring brake actuator component(s), pressures, sounds, and/or temperatures in or around the spring brake actuator 20, accelerations of spring brake actuator component(s), and/or the like. In certain examples, the sensor assembly 60 includes a main body 61 and a sensing component that is a sensor 62 (described below). The number and/or type of sensors 62 utilized with the sensor assembly 60 can vary, and some example sensors 60 that can be utilized with the sensor assembly 60 include Hall-Effect sensors, temperature sensors, proximity sensors, motions sensors, vibrations sensors, accelerometers, inertial measurement units (IMU), gyroscopes, magnetometers, pressure sensors, microphones, and/or the like.

In one example, the sensing component is a sensor 62 configured to sense one or more magnetic characteristics (e.g., magnetic field, magnetic field strength) of one or more magnets 71, 72 and output sensor data corresponding to the sensed magnetic characteristics. In one example, the sensor 62 senses a magnetic field strength and outputs sensor data corresponding to a value of the detected magnetic field strength. For instance, the data may be utilized by a control system (not depicted) of the spring brake actuator 20 or the vehicle to determine brake stroke. The sensor 62 can be any suitable sensor capable of sensing magnetic characteristics, and in one example, the sensor 62 is a Hall-Effect sensor. An example of a commercially available Hall-Effect sensor is part number Si7210 manufactured by Silicon Labs, and another commercially available Hall-Effect sensor is part number TLV493 manufactured by Infineon. Note in certain examples, the sensor 62 is configured to also sense temperature of or near the spring brake actuator 20.

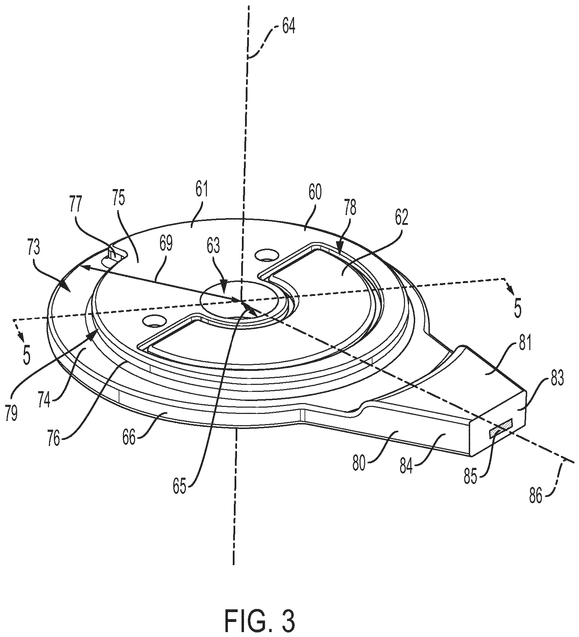

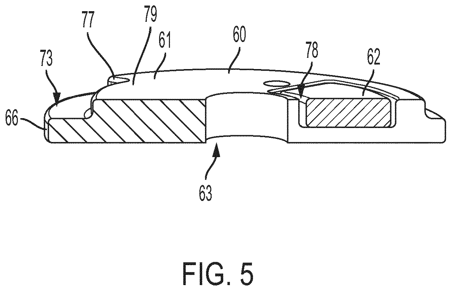

Figs. 3-9 depict another example sensor assembly 60 according to the present disclosure. Note that the example spring brake actuator 20 and the example sensor assembly 60 depicted in Figs. 3-9 can include one or more features and/or components described with reference to the example spring brake actuator 20 and the example sensor assembly 60 described above and depicted in Figs. 1-2. Similarly, the example spring brake actuator 20 and the example sensor assembly 60 described above and depicted in Figs. 1-2 can include any features and/or components described below and depicted in Figs. 3-9. Note that components and/or features of the example spring brake actuator 20 and the example sensor assembly 60 described with reference to Figs. 3-9 that are similar to the features and/or components of the example spring brake actuator 20 and the example sensor assembly 60 described with reference to Figs. 1-2 are denoted with the same part numbers, however, it should be understood that the use of the same part numbers for components and/or features of the present disclosure should not be construed to indicate that the similarly marked systems and/or components are necessarily identical. Instead, the similarly marked components and/or features may have varying features or characteristics. For instance, the main body 61 of the sensor assembly 60 of Figs. 1-2 has a different shape (e.g., axially extending perimeter lip) that is different than the shape of the main body 61 depicted in Figs. 3-9.

The sensor assembly 60 has a main body 61. The size and the shape of the main body 61 can vary, and in one example, the main body 61 is disc-shaped. The main body 61 defines an assembly axis 64, and the hole 63 is centered on the assembly axis 64. The hole 63 has a hole radius 65. A perimeter surface 66 that extends along the outer perimeter of the main body 61.

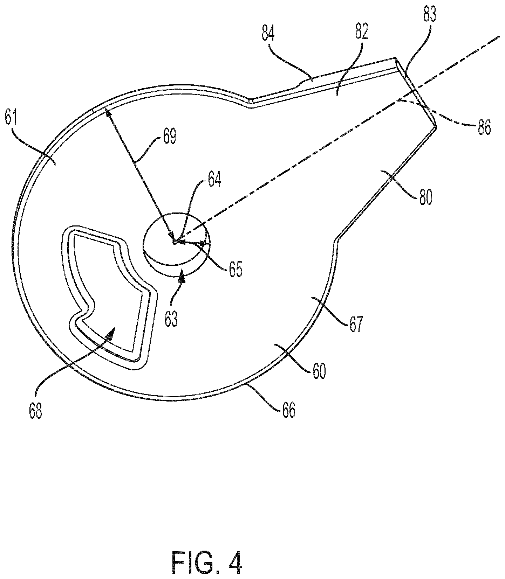

A lower end surface 67 (Fig. 4) faces the end wall 23 of the housing 22 (see Fig. 1), and a lower cutout 68 (Fig. 4) is defined in the lower end surface 67. In certain examples, the sensing components, such as sensors, printed circuit boards, or the like, may be located in the lower cutout 68.

The main body 61 also has a first upper end surface 74 and a second upper end surface 75. The first upper end surface 74 is axially offset from the second upper end surface 75, and the second upper end surface 75 is part of a raised center portion 79 of the main body 61. A radially extending first cutout 73 at least partially extends along the perimeter of the sensor assembly 60, and a transition surface 76 extends between the upper end surfaces 74, 75. The transition surface 76 comprises a wall 77 (described in more detail therein). In certain examples, the transition surface 76 is rounded such that there is a smooth transition between the upper end surfaces 74, 75.

A cavity 78 is defined in the second upper end surface 75, and the sensing component, such as the sensor 62, is located in the cavity 78. In certain examples, the sensor 62 comprises a printed circuit board (PCB) and one or more wires extending therefrom. The sensor 62 may be coated with a material known in the industry to prevent water and/or debris from damaging the sensor 62 and/or the PCB.

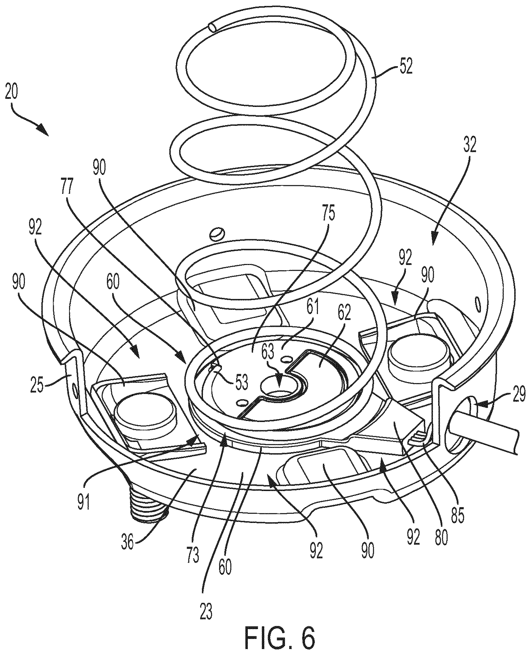

The sensor assembly 60 also includes at least one radially extending leg 80. The leg has an upper leg surface 81, a lower leg surface 82, an end leg surface 83, and a pair of opposing side leg surfaces 84. The leg 80 extends along a leg axis 86 that radially extends from the main body 61. The leg 80 is tapered such that the side leg surfaces 84 converge toward each other in a radial direction away from the assembly axis 64. One or more wires 85 (see Fig. 6 and schematically depicted in Fig. 3) extend through and away from the leg 80. The wires 85 are connected to the sensor 62 (e.g., the wires 85 are connected to the wires of the sensor 62).

Turning now to Figs. 6-7, the sensor assembly 60 is depicted coupled to another example spring brake actuator 20, which is partially depicted. The lower end surface 67 (see Fig. 4) faces and/or abuts the end wall 23 of the second housing portion 25. The hole 63 in the sensor assembly 60 is configured to receive the rod 43 therethrough and the hole 63 is adjacent to the hole in the end wall 23. The return spring 52 rests on the first upper end surface 74 and extends along the first cutout 73. As such, the sensor assembly 60 is sandwiched between the return spring 52 and the end wall 23. The spring end 53 engages and/or abuts the wall 77 on the sensor assembly 60 (described in more detail therein). The leg 80 is oriented towards a secondary hole 29 through which the wires 85 extend for connection to other electrical and/or control components (e.g., controller).

The present inventor recognized that conventional sensors located in spring brake actuators are prone to inadvertent movement as the spring brake actuator is operated and/or due to vibrations resulting from the vehicle moving over the roadway. Excessive and/or unexpected movement of the conventional sensors may decrease the effectiveness of the conventional sensors, alter the sensed data, and/or damage the conventional sensors. For example, excessive rotation of the conventional sensor (e.g., due to movement of the return spring or vibrations from the vehicle) can induce strain on the power and/or communication wire/cable thereby resulting in premature failure of the conventional sensor. Also, the conventional sensor may excessively translate along the surface of the end wall of the second housing portion as the push rod extends out of and retracts into the housing and the second chamber.

Accordingly, through research and experimentation, the present inventor developed the example sensor assemblies 60 of the present disclosure which advantageously prevent or at least reduce undesired movement of the sensor 62 within the spring brake actuator 20. Preventing movement, such as excessive rotation and/or translation, of the sensor 62 and/or the sensor assembly 60 advantageously promotes and/or facilitates accurate sensing by the sensor 62 of characteristics of the spring brake actuator 20 and prevents or minimizes damage to wires or connecting cables extending from the sensor assembly 60.

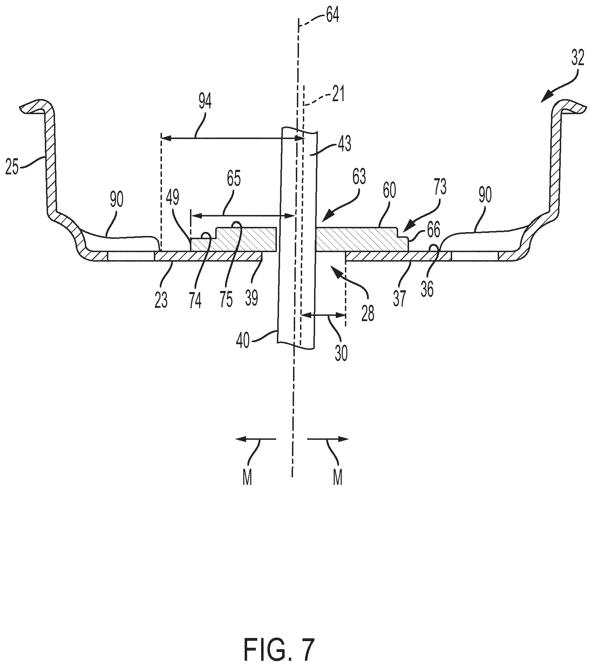

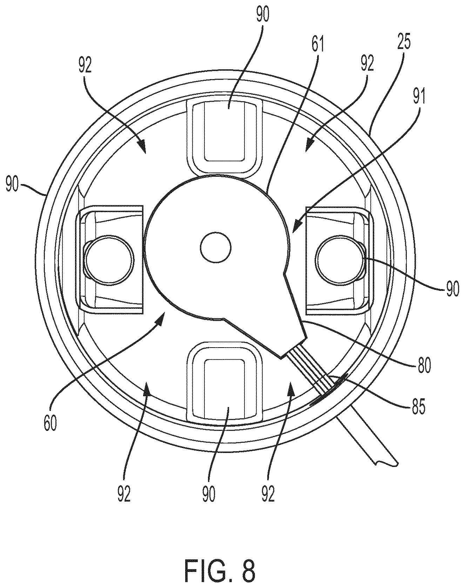

Fig. 8 depicts the example sensor assembly 60 coupled to the end wall 23 of the second housing portion 25 (see also Fig. 1). The end wall 22 has a plurality of stiffening elements 90 axially extending from the end wall 23, and the stiffening elements 90 are configured to reinforce the end wall 23 which is subjected to forces acting thereon as the spring brake actuator 20 is operated (e.g., bolts are welded to the end wall 23 and coupled to the frame of the vehicle and operation of the spring brake actuator 20 causes the forces to act on the end wall 23). The type of stiffening elements 90 can vary, and in certain examples, the stiffening elements 90 can be a formed stiffener that is formed (e.g., stamped) in the end wall 23, a stiffener component (e.g., bracket, plate, U-shaped member) coupled (e.g., welded) to an interior surface 36 (Fig. 6) or exterior surface 37 (Fig. 7) of the end wall 23, a mounting stud coupled to the end wall 23, and/or the like. In certain examples, the stiffening elements 90 axially extend into the second chamber 32 and/or radially extend inwardly toward the brake axis 21 and/or the hole 28 (Fig. 7).

The stiffening elements 90 generally define a pocket 91 therebetween in which the sensor assembly 60 is located and one or more entrapment areas 92 are located between adjacent stiffening elements 90. As noted above, the rod 43 extends through the hole 63 in the sensor assembly 60. As the rod 43 radially moves due to operation of the spring brake actuator 20 (see arrows M on Fig. 7), the rod 43 may radially moves the sensor assembly 60. The radial movement of the rod 43 is limited or constrained by the edge surface 39 of the second housing portion 25 that surrounds the hole 28.

The hole 63 of the sensor assembly 60 has a diameter that is greater than the diameter of the rod 43 such that the sensor assembly 60 may independently translate relative to the rod 43. The sensor assembly 60 is free to move relative (e.g., away) from the push rod 43. In one example, the rod 43 can make contact with the edge surface 39 such that radial movement of the rod 43 is restricted. When the rod 43 engages the edge surface 39, the rod 43 does not radially act on the sensor assembly 60 and thereby does not compress the sensor assembly 60 between the rod 43 and one of the stiffening elements 90. As such, damaging compressive forces are not applied to the sensor assembly 60.

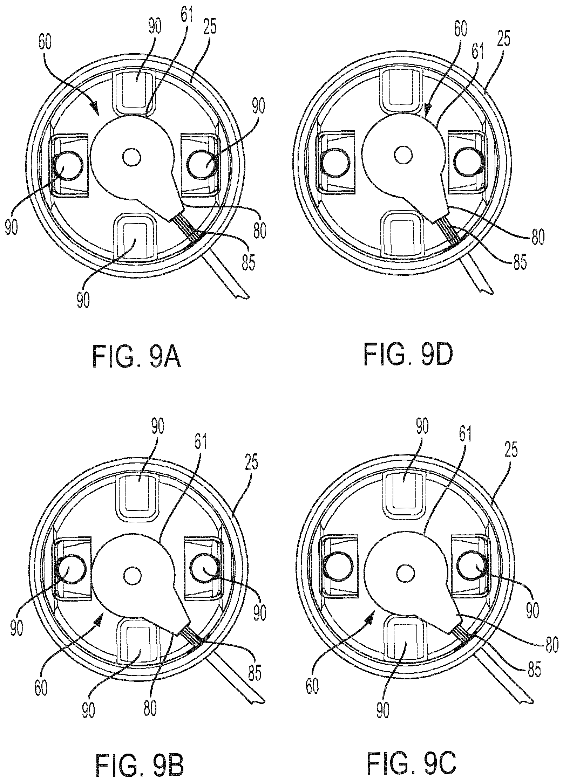

In addition, an outer radius 69 of the main body 61 extends between the assembly axis 64 and the perimeter surface 66. The outer radius 69 is less than a first distance 94 (Fig. 7) that extends between the brake axis 21 that corresponds to the centerline of the hole 28 and a radially inner edge 49 of the stiffening element 90 located adjacent or oriented toward the hole 28 (noted that the stiffening elements 90 are schematically depicted in Fig. 7). As such, the sensor assembly 60 can translate in the pocket 91 and will not be compressed between the rod 43 and one or more stiffening elements 90. Note that if the sensor assembly 60 was compressed between the rod 43 and the stiffening elements 90, the sensor assembly 60 may be subjected to forces or stresses that could damage the sensor assembly 60. In certain examples, the perimeter surface 66 of the sensor assembly 60 may contact one or more of the stiffening elements 90. Fig. 9 depicts the sensor assembly 60 depicted in Fig. 8 in different positions (each position is denoted as "A", "B", "C", and "D") relative to the second housing portion 25. In certain examples, the hole 28 in the housing 22 has a hole radius 30 (Fig. 7) and the hole radius 30 is less than a minimum distance defined between the perimeter surface 66 of the sensor assembly 60 and the stiffening element 90 located nearest to the hole 28.

The leg 80 of the sensor assembly 60 extends between two adjacent stiffening elements 90 into one of the entrapment areas 92. During operation of the spring brake actuator 20, the return spring 52 and/or the rod 43 may act on the sensor assembly 60 such that the sensor assembly 60 tends to move (e.g., rotate about its assembly axis 64). For example, the spring end 53 of the return spring 52 (See Fig. 6) is received into the first cutout 73 and bears on the wall 77 such that the return spring 52 may apply rotational forces to the sensor assembly 60. When rotational forces from the return spring 52 act on the sensor assembly 60, the leg 80 is configured to engage (e.g., bear on) one of the stiffening elements 90 and thereby resist excessive rotation of the sensor assembly 60. The leg 80 is tapered to thereby allow for translation of leg 80 without the leg 80 becoming caught on one or more of the stiffening elements 90 (e.g., the leg 80 does not bind on the stiffeners). In certain examples, at least a portion of the leg 80 remains in one of the entrapment areas 92 regardless of the translational position of the sensor assembly 60 (and as such, at least a portion of the leg 80 cannot move out of the entrapment area 92 and is trapped in the entrapment area between radially adjacent stiffening elements 90. Referring to Fig. 9, the sensor assembly 60 is depicted in several different positions as the sensor assembly 60 is translated, and notably the orientation of the sensor assembly 60 in different positions is generally the same (e.g., the leg 80 is angled downwardly and to the right when viewing the images in Fig. 9) due to the leg 80 preventing excessive rotation of the sensor assembly 60. That is, as the rotational forces are applied to the sensor assembly 60 by the push rod 40 and/or the return spring 52, the side leg surface 84 may engage one or more stiffening elements 90 thereby preventing excessive rotation of the sensor assembly 60.

In certain examples, a spring brake actuator for braking a wheel of a vehicle includes a housing defining a chamber, a push rod extending from the chamber such that pneumatic activation of the spring brake actuator causes the push rod to further extend out of the chamber to thereby activate braking of the wheel of the vehicle and such that pneumatic deactivation of the spring brake actuator causes the push rod to retract back into the chamber to thereby deactivate braking of the wheel of the vehicle, and a sensor assembly located in the chamber such that the housing limits movement of the sensor assembly in the chamber.

In independent aspects, the housing includes a stiffening element in the chamber that limits movement of the sensor assembly in the chamber. In independent aspects, the housing extends along a brake axis and the stiffening element limits rotation of the sensor assembly about the brake axis. In independent aspects, the stiffening element is one stiffening element in a pair of stiffening elements that limit rotation of the sensor assembly. In independent aspects, the housing extends along a brake axis and the sensor assembly includes a radially extending leg that engages the stiffening element to thereby limit movement of the sensor assembly. In independent aspects, the stiffening element is one stiffening element in a pair of stiffening elements and the pair of stiffening elements rotationally traps the leg therebetween. In independent aspects, the housing defines an entrapment area within the chamber in which the leg is constrained. In independent aspects, the leg extends along a leg axis and is tapered radially inwardly in a direction away from the brake axis. In independent aspects, the spring brake actuator includes a magnet and the sensor assembly includes a sensor configured to sense magnetic field of the magnet. In independent aspects, the spring brake actuator includes a return spring in the chamber and the housing has an end wall and the sensor assembly is sandwiched between the return spring and the end wall. In independent aspects, the sensor assembly defines a cutout that receives the return spring. In independent aspects, the sensor assembly has a wall that engages with a spring end of the return spring. In independent aspects, the sensor assembly has an outer radius extending an assembly axis and a perimeter surface that is less than a first distance defined between a brake axis along which the housing extends and an inner edge of the stiffening element. In independent aspects, the housing defines an entrapment area within the chamber in which at least a portion of the sensor assembly is rotationally constrained.

In certain examples, a spring brake actuator for braking a wheel of a vehicle includes a housing defining a chamber and including an end wall and a stiffening element, the stiffening element coupled to the end wall and extending into the chamber, a push rod extending from the chamber through the end wall such that pneumatic activation of the spring brake actuator causes the push rod to further extend out of the chamber to thereby activate braking of the wheel of the vehicle and such that pneumatic deactivation of the spring brake actuator causes the push rod to retract back into the chamber to thereby deactivate braking of the wheel of the vehicle, and a sensor assembly located in the chamber and including a leg that engages the stiffening element thereby limiting movement of the sensor assembly.

In independent aspects, the housing extends along a brake axis, the leg radially extends along a leg axis, and the stiffening element limits rotation of the sensor assembly about the brake axis. In independent aspects, the leg is tapered radially inwardly in a direction away from the brake axis. In independent aspects, the stiffening element is a first stiffening element of a pair of stiffening elements and the pair of stiffening elements rotationally traps the leg therebetween. In independent aspects, the spring brake actuator includes return spring in the chamber and the sensor assembly is sandwiched between the return spring and the end wall. In independent aspects, the sensor assembly defines a first cutout that receives the return spring and includes a wall that engages with a spring end of the return spring.

In certain examples, a sensor assembly for a spring brake actuator having a push rod and a housing with one or more stiffening elements includes a body defining a cavity in which sensing components are located and a hole configured to permit passage of the push rod therethrough and a leg radially extending from the body and configured to engage the one or more stiffening elements to prevent excessive rotation of the sensor assembly.

In independent aspects, the hole has a diameter greater than a diameter of the push rod. In independent aspects, the body has a radius less than a length extending between an axis of the rod and an end of one of the stiffening elements.

In certain examples, a spring brake actuator for braking a wheel of a vehicle includes a housing defining a chamber and including one or more stiffening elements, a push rod extending from the housing such that pneumatic activation of the spring brake actuator causes the push rod to further extend out of the chamber to thereby activate braking of the wheel of the vehicle and such that pneumatic deactivation of the spring brake actuator causes the push rod to retract back into the chamber to thereby deactivate braking of the wheel of the vehicle, and a sensor assembly located in the chamber and including a leg configured to engage one or more stiffening elements to thereby prevent excessive rotation of the sensor assembly.

In independent aspects, the housing extends along a brake axis and the sensor assembly has a radially extending leg that engages the housing such that housing limits rotation of the leg about the brake axis. In independent aspects, the spring brake actuator includes a magnet and the sensor assembly defines a cavity in which a sensor is located, the sensor is configured to sense magnetic field of the magnet.

In certain examples, a spring brake actuator for braking a wheel of a vehicle includes a housing defining a chamber, a push rod extending from the chamber such that pneumatic activation of the spring brake actuator causes the push rod to further extend out of the chamber to thereby activate braking of the wheel of the vehicle and such that pneumatic deactivation of the spring brake actuator causes the push rod to retract back into the chamber to thereby deactivate braking of the wheel of the vehicle, and a sensor assembly configured to sense a component of the spring brake actuator, the sensor assembly is located in the chamber such that the housing limits movement of the sensor assembly in the chamber.

In certain examples, a spring brake actuator for braking a wheel of a vehicle includes a housing defining a chamber and including an end wall and a stiffening element, the stiffening element coupled to the end wall and extending into the chamber, a push rod extending from the chamber through the end wall such that pneumatic activation of the spring brake actuator causes the push rod to further extend out of the chamber to thereby activate braking of the wheel of the vehicle and such that pneumatic deactivation of the spring brake actuator causes the push rod to retract back into the chamber to thereby deactivate braking of the wheel of the vehicle, and a sensor assembly located in the chamber and configured to sense a component of the spring brake actuator, the sensor assembly having a leg that engages the stiffening element thereby limiting movement of the sensor assembly.

Citations to a number of references are made herein. In the event that there is an inconsistency between a definition of a term in the specification as compared to a definition of the term in a cited reference, the term should be interpreted based on the definition in the specification.

In the present description, certain terms have been used for brevity, clarity, and understanding. No unnecessary limitations are to be inferred therefrom beyond the requirement of the prior art because such terms are used for descriptive purposes and are intended to be broadly construed. The different apparatuses, systems, and method steps described herein may be used alone or in combination with other apparatuses, systems, and methods. It is to be expected that various equivalents, alternatives, and modifications are possible within the scope of the appended claims.

The functional block diagrams, operational sequences, and flow diagrams provided in the Figures are representative of exemplary architectures, environments, and methodologies for performing novel aspects of the disclosure. While, for purposes of simplicity of explanation, the methodologies included herein may be in the form of a functional diagram, operational sequence, or flow diagram, and may be described as a series of acts, it is to be understood and appreciated that the methodologies are not limited by the order of acts, as some acts may, in accordance therewith, occur in a different order and/or concurrently with other acts from that shown and described herein. For example, those skilled in the art will understand and appreciate that a methodology can alternatively be represented as a series of interrelated states or events, such as in a state diagram. Moreover, not all acts illustrated in a methodology may be required for a novel implementation.

This written description uses examples to disclose the invention and also to enable any person skilled in the art to make and use the invention. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

The following clauses set out features of the invention which may not be presently claimed but which may form the basis for amendments or future divisional applications.

### CLAUSES

1. A spring brake actuator for braking a wheel of a vehicle, the spring brake actuator comprising:
   a housing defining a chamber;
   a push rod extending from the chamber, wherein pneumatic activation of the spring brake actuator causes the push rod to further extend out of the chamber to thereby activate braking of the wheel of the vehicle and wherein pneumatic deactivation of the spring brake actuator causes the push rod to retract back into the chamber to thereby deactivate braking of the wheel of the vehicle; and
   a sensor assembly located in the chamber such that the housing limits movement of the sensor assembly in the chamber.
2. The spring brake actuator according to clause 1, wherein the housing includes a stiffening element in the chamber that limits movement of the sensor assembly in the chamber.
3. The spring brake actuator according to clause 2, wherein the housing extends along a brake axis, and wherein the stiffening element limits rotation of the sensor assembly about the brake axis.
4. The spring brake actuator according to clause 3, wherein the stiffening element is one stiffening element in a pair of stiffening elements that limit rotation of the sensor assembly.
5. The spring brake actuator according to clause 2, wherein the housing extends along a brake axis, and wherein the sensor assembly includes a radially extending leg that engages the stiffening element to thereby limit movement of the sensor assembly.
6. The spring brake actuator according to clause 5, wherein the stiffening element is one stiffening element in a pair of stiffening elements, and wherein the pair of stiffening elements rotationally traps the leg therebetween.
7. The spring brake actuator according to clause 5, wherein the housing defines an entrapment area within the chamber in which the leg is constrained.
8. The spring brake actuator according to clause 5, wherein the leg extends along a leg axis and is tapered radially inwardly in a direction away from the brake axis.
9. The spring brake actuator according to clause 5, further comprising a magnet, and wherein the sensor assembly includes a sensor configured to sense magnetic field of the magnet.
10. The spring brake actuator according to clause 5, further comprising a return spring in the chamber and wherein the housing has an end wall; and
   wherein the sensor assembly is sandwiched between the return spring and the end wall.
11. The spring brake actuator according to clause 10, wherein the sensor assembly defines a cutout that receives the return spring.
12. The spring brake actuator according to clause 11, wherein the sensor assembly has a wall that engages with a spring end of the return spring.
13. The spring brake actuator according to clause 2, wherein the sensor assembly has an outer radius extending an assembly axis and a perimeter surface that is less than a first distance defined between a brake axis along which the housing extends and an inner edge of the stiffening element.
14. The spring brake actuator according to clause 1, wherein the housing defines an entrapment area within the chamber in which at least a portion of the sensor assembly is rotationally constrained.
15. A spring brake actuator for braking a wheel of a vehicle, the spring brake actuator comprising:
   a housing defining a chamber and including an end wall and a stiffening element, the stiffening element coupled to the end wall and extending into the chamber;
   a push rod extending from the chamber through the end wall, wherein pneumatic activation of the spring brake actuator causes the push rod to further extend out of the chamber to thereby activate braking of the wheel of the vehicle and wherein pneumatic deactivation of the spring brake actuator causes the push rod to retract back into the chamber to thereby deactivate braking of the wheel of the vehicle; and
   a sensor assembly located in the chamber and including a leg that engages the stiffening element thereby limiting movement of the sensor assembly.
16. The spring brake actuator according to clause 15, wherein the housing extends along a brake axis;
   wherein the leg radially extends along a leg axis; and
   wherein the stiffening element limits rotation of the sensor assembly about the brake axis.
17. The spring brake actuator according to clause 16, wherein the leg is tapered radially inwardly in a direction away from the brake axis.
18. The spring brake actuator according to clause 15, wherein the stiffening element is a first stiffening element of a pair of stiffening elements and the pair of stiffening elements rotationally traps the leg therebetween.
19. The spring brake actuator according to clause 15, further comprising a return spring in the chamber;
   wherein the sensor assembly is sandwiched between the return spring and the end wall.
20. The spring brake actuator according to clause 19, wherein the sensor assembly defines a first cutout that receives the return spring and includes a wall that engages with a spring end of the return spring.

## Claims

1. A spring brake actuator for braking a wheel of a vehicle, the spring brake actuator comprising:
a housing defining a chamber;
a push rod extending from the chamber, wherein pneumatic activation of the spring brake actuator causes the push rod to further extend out of the chamber to thereby activate braking of the wheel of the vehicle and wherein pneumatic deactivation of the spring brake actuator causes the push rod to retract back into the chamber to thereby deactivate braking of the wheel of the vehicle; and
a sensor assembly located in the chamber such that the housing limits movement of the sensor assembly in the chamber.

2. The spring brake actuator according to claim 1, wherein the housing includes a stiffening element in the chamber that limits movement of the sensor assembly in the chamber.

3. The spring brake actuator according to claim 1 or 2, wherein the housing extends along a brake axis, and wherein the stiffening element limits rotation of the sensor assembly about the brake axis.

4. The spring brake actuator according to claim 2 or 3, wherein the stiffening element is one stiffening element in a pair of stiffening elements that limit rotation of the sensor assembly.

5. The spring brake actuator according to any one of claims 2-4, wherein the housing extends along a brake axis, and wherein the sensor assembly includes a radially extending leg that engages the stiffening element to thereby limit movement of the sensor assembly.

6. The spring brake actuator according to claim 5, wherein the stiffening element is one stiffening element in a pair of stiffening elements, and wherein the pair of stiffening elements rotationally traps the leg therebetween.

7. The spring brake actuator according to claim 5 or 6, wherein the housing defines an entrapment area within the chamber in which the leg is constrained.

8. The spring brake actuator according to any one of claims 5-7, wherein the leg extends along a leg axis and is tapered radially inwardly in a direction away from the brake axis.

9. The spring brake actuator according to any one of the preceding claims, further comprising a magnet, and wherein the sensor assembly includes a sensor configured to sense magnetic field of the magnet.

10. The spring brake actuator according to any one of the preceding claims, further comprising a return spring in the chamber and wherein the housing has an end wall; and
wherein the sensor assembly is sandwiched between the return spring and the end wall.

11. The spring brake actuator according to claim 10, wherein the sensor assembly defines a cutout that receives the return spring.

12. The spring brake actuator according to claim 11, wherein the sensor assembly has a wall that engages with a spring end of the return spring.

13. The spring brake actuator according to any one of claims 2-12, wherein the sensor assembly has an outer radius extending an assembly axis and a perimeter surface that is less than a first distance defined between a brake axis along which the housing extends and an inner edge of the stiffening element.

14. The spring brake actuator according to any one of the preceding claims, wherein the housing defines an entrapment area within the chamber in which at least a portion of the sensor assembly is rotationally constrained.
